# EUROPÄISCHE PATENTANMELDUNG

(11) **EP 4 137 229 A1**
(43) Veröffentlichungstag der Anmeldung: **22.02.2023**
(21) Anmeldenummer: 22000158.0
(22) Anmeldetag: 15.06.2022
(51) Int. Cl.: B01J 19/12, B01J 19/18

(54) **VORRICHTUNG FÜR PHOTONENINDUZIERTE PROZESSE UND/ODER MODIFIKATIONEN VON MATERIALIEN**

(30) Priorität: 20.08.2021 DE 102021004268
(71) Anmelder: Forschungszentrum Jülich GmbH, 52425 Jülich (DE)
(72) Erfinder: Mikulics, Martin, 52428 Jülich (DE); Hardtdegen, Hilde, 52064 Aachen (DE); Mayer, Joachim, 52223 Stolberg (DE)

(57) **Zusammenfassung**

Die Erfindung betrifft eine Vorrichtung umfassend einen Hohlkörper entwickelt zur Aufnahme von Material und/oder zum Transport von Material an einen Zielort oder von einem Zielort weg, an dem lokal eine photoneninduzierte Modifikation des Materials erfolgt, mit einem oberen Abschnitt des Hohlkörpers und einem unteren Abschnitt des Hohlkörpers mit einer Öffnung, aus der das zu transportierende Material ein- und/oder austreten kann, wobei die Öffnung an dem Zielort mündet, an dem lokal die photoneninduzierte Modifikation des Materials stattfindet, und wobei der Hohlkörper wenigstens einen Lichtleiter aufweist, der an wenigstens einer Photonenquelle angeordnet und/oder an wenigstens eine Photonenquelle angeschlossen ist und der so ausgestaltet ist, dass ein Eingangslicht, welches in den Lichtleiter aus einer Photonenquelle eintritt, nur an der Öffnung des unteren Abschnitts des Hohlkörpers austritt.

Die Erfindung betrifft weiterhin eine Anordnung, die auch als Array bezeichnet werden kann, zur Aufnahme von Material und/oder zum Transport von Material an einen Zielort oder von einem Zielort weg, an dem lokal eine photoneninduzierte Modifikation des Materials erfolgt, umfassend mehr als einen der zuvor beschriebenen erfindungsgemäßen Hohlkörper, die jeweils mit einer Photonenquelle verbunden sind, und wobei die jeweiligen Photonenquellen der Hohlkörper Licht gleicher oder unterschiedlicher Wellenlängen, Intensitäten oder Leistung aussenden können.

Die Erfindung betrifft auch ein Verfahren zur Aufnahme von Material und/oder zum Transport von Material an einen Zielort oder von einem Zielort weg, an dem lokal eine photoneninduzierte Modifikation des Materials erfolgt, umfassend folgende Verfahrensschritte:
a) Einbringen des Materials, welches photoneninduziert modifiziert werden soll, in den Innenraum des Hohlkörpers der erfindungsgemäßen Vorrichtung oder der Anordnung;
b) Transport des Materials an die Öffnung des Hohlkörpers oder der Anordnung;
c) Anschließen einer Photonenquelle an den/die Lichtleiter des Hohlkörpers oder der Anordnung; und/oder
d) Einschalten der Photonenquelle und lokale Einstrahlung der Photonenenergie aus der Photonenquelle über den/die Lichtleiter auf das Material an der Öffnung des Hohlkörpers zur gezielten photoneninduzierten Modifikation des Materials an der Öffnung des Hohlkörpers.

## Beschreibung

Die Erfindung betrifft eine Vorrichtung zum Transport und zum zielgerichteten Applizieren von Material, welches, ausgelöst durch eine photoneninduzierte Reaktion oder einen photoneninduzierten Prozess, lokal am Zielort modifiziert wird, wobei die Vorrichtung wenigstens eine Photonenquelle zum Auslösen dieser photoneninduzierten Reaktion oder dieses Prozesses aufweist. Die Erfindung betrifft weiterhin eine Anordnung sowie ein Verfahren zur lokalen, durch eine photoneninduzierte Reaktion oder einen photoneninduzierten Prozess ausgelöste Modifikation von Materialien unter Verwendung dieser Vorrichtung.

### Stand der Technik

In der Praxis entsteht oft die Notwendigkeit ein Material z.B. ein Trägermaterial (z.B. flüssige Monomere versetzt mit Nanopartikeln) zu transportieren und gleichzeitig den Diffusionsprozess bzw. Barrieren an der Grenzfläche zu einem Zielobjekt zu überwinden und am Zielort selbst, lokal eine Modifikation des Materials, wie beispielsweise eine Polymerisation, zu initiieren. Dies kann nur gelingen, wenn gleichzeitig und ganz gezielt lokal das transportierte Material mit Photonen der geeigneten Wellenlänge (Photonenenergie) hinsichtlich der Diffusionseigenschaften des Materials gesteuert wird und im Folgeprozess der Verlauf der photoneninduzierten und/ oder thermischen Reaktionen im selben Zielbereich mit Energie in Form von geeigneten Photonen-Wellenlängen gesteuert wird.

In verschiedenen wissenschaftlichen Gebieten, in der Forschung, wie auch in der Praxis existieren bereits eine Vielfalt an technischen Injektionsverfahren und Injektionslösungen wie beispielsweise Pipetten, Kapillaren und/ oder Röhrchen und ähnliche Produkte, die dazu genutzt werden, Material an einen gewünschten Ort zu transportieren und dort eine Reaktion vor Ort auszuführen. Auf der anderen Seite gibt es verschiedene Lösungen auf dem Markt, die auf mit Lichtquellen und Glasfasern gekoppelten Systemen beruhen, und die sich für verschiedene Anwendungen etabliert haben.

Der Stand der Technik weist den Nachteil auf, dass das zu transportierende Material (z.B. lichthärtendes Zahnfüllmaterial) nicht gleichzeitig, kontinuierlich und gezielt lokal mit Licht (Photonen) geeigneter Wellenlänge behandelt und damit eine lichtinduzierte Modifikation, wie beispielsweise eine Polymerisation dieses Materials, an einem lokal vorbestimmten Ort initiiert werden kann. Dieses kann nach bisherigem Stand der Technik nur nacheinander geschehen, welches nachteilig ist in Bezug auf Aufwand, Positionsgenauigkeit des ausgesuchten Ortes an der Grenzfläche im Zielbereich und auf die (z. B.) mechanischen Eigenschaften des Materials. Mit den nach dem Stand der Technik bekannten Vorrichtungen ist es bisher auch nicht möglich, gezielt eine Textur, Beschaffenheit oder die Morphologie von räumlichen Strukturen, insbesondere im Nano- und Mikrostrukturbereich, lokal zu verändern.

### Aufgabe und Lösung

Es ist daher die Aufgabe der Erfindung, die Nachteile des Stands der Technik zu überwinden und eine Vorrichtung, eine Anordnung und ein Verfahren zur Verfügung zu stellen, mit der/dem sowohl ein Transport eines Materials an einen gewünschten Zielort als auch eine lokale photoneninduzierte Modifikation von Material oder ein photoneninduzierter Prozess an diesem Zielort ermöglicht oder ausgelöst werden kann.

Diese Aufgabe wird erfindungsgemäß gelöst durch eine Vorrichtung umfassend einen Hohlkörper gemäß Hauptanspruch und eine Anordnung und ein Verfahren gemäß Nebenanspruch.

Weitere vorteilhafte Ausgestaltungen ergeben sich aus den jeweils darauf rückbezogenen Unteransprüchen.

Die erfindungsgemäße Vorrichtung, umfassend einen Hohlkörper, sowie die Anordnung, mit der vorzugsweise integrierten Injektor-Photonenquellen-Einheit und das Verfahren ermöglichen und aktivieren lokal, insbesondere im mikro- und nano-Skala Bereich, der beispielsweise, jedoch nicht darauf beschränkt, im Bereich von 1 nm bis 1000 µm liegen kann, den lokalen Transport und eine photoneninduzierte Modifikation oder das Auslösen eines photoneninduzierten Prozesses, insbesondere eine photochemische und/ oder thermische Aktivierung (z. B. Polymerisation) oder Modifizierung von Material, z.B. Monomeren, Nanopartikeln, Kompositen, in einem spezifischen, begrenzten Zielbereich/an einem Zielort des Materials bzw. an einem biologischen, organischen und/oder anorganischen Objekt. So wird es weiterhin mit der erfindungsgemäßen Vorrichtung, umfassend einen Hohlkörper, sowie der Anordnung und dem Verfahren ermöglicht, gezielt eine Textur, Struktur oder die Beschaffenheit oder Morphologie von räumlichen Strukturen lokal am Zielort zu verändern oder zu erzeugen, und dies insbesondere im mikro- und nano-skaligen Bereich.

### Gegenstand der Erfindung

Im Rahmen der Erfindung wurde eine Vorrichtung umfassend einen Hohlkörper entwickelt zur Aufnahme von Material in den Innenraum des Hohlkörpers und/oder zum Transport von Material vom Innenraum des Hohlkörpers an einen Zielort oder von einem Zielort weg, an dem lokal eine photoneninduzierte oder thermische Modifikation oder ein photoneninduzierter Prozess des Materials erfolgt, mit einem oberen Abschnitt des Hohlkörpers und einem unteren Abschnitt des Hohlkörpers mit einer Öffnung, aus der das zu transportierende Material in den Innenraum des Hohlkörpers eintreten und/oder aus dem Innenraum des Hohlkörpers austreten kann, wobei die Öffnung an den Zielort mündet, an dem lokal die photoneninduzierte oder thermische Modifikation oder der photoneninduzierte Prozess des Materials stattfindet, und wobei der Hohlkörper wenigstens einen Lichtleiter aufweist, der an wenigstens einer Photonenquelle angeordnet und/
oder an wenigstens eine Photonenquelle angeschlossen ist und der so ausgestaltet ist, dass ein Eingangslicht, welches in den Lichtleiter aus einer Photonenquelle eintritt, nur an der Öffnung des unteren Abschnitts des Hohlkörpers austritt.

In einer alternativen Ausgestaltung kann der Hohlkörper auch wenigstens eine Photonenquelle ohne Lichtleiter aufweisen, wobei die wenigstens eine Photonenquelle im Innenraum oder Innenvolumen des Hohlkörpers integriert ist und/oder von außen am Hohlkörper angeordnet ist und direkt am Zielort angeordnet ist.

Der Hohlkörper, der auch als Injektor ausgestaltet sein kann, kann wenigstens einen oder auch mehrere Lichtleiter aufweisen. So kann der Hohlkörper beispielsweise nur einen Lichtleiter oder auch ein Bündel von Lichtleitern aufweisen, die entweder in den Hohlkörper oder Injektor, insbesondere im Innenraum oder Innenvolumen des Hohlkörpers, angeordnet oder integriert sind und/oder von außen am Hohlkörper oder Injektor angeordnet sind.

Der Hohlkörper kann dabei vorzugsweise einen kreisförmigen oder ovalen Querschnitt aufweisen, wobei auch jegliche anderen geometrischen Querschnitte, wie beispielsweise rechteckige, quadratische, 5 bis 8-eckige Querschnitte oder jegliche andere polygonalen Querschnitte geeignet sind.

Der oder die Lichtleiter können vorzugsweise als faserförmige/r oder rohrförmige/r oder stabförmiger Lichtkörper ausgestaltet sein, von einem totalreflektierenden Material umhüllt sein, jeweils eine Licht-Eingangsöffnung und eine Licht-Ausgangsöffnung aufweisen, wobei die Licht-Eingangsöffnung/en an einer Photonenquelle angeordnet ist/ sind oder an wenigstens eine Photonenquelle angeschlossen ist/sind und die Licht-Ausgangsöffnung/en an der Öffnung des unteren Abschnitts des Hohlkörpers angeordnet ist/sind und in den Zielort mündet/münden. In einer vorteilhaften Ausführung kann die Ausgangsöffnung in eine Aperturblende münden oder als eine solche ausgestaltet sein, die vorteilhaft eine Anwendung im Nahfeldbereich ermöglicht.

Der oder die Lichtleiter können, vorzugsweise, jedoch nicht darauf beschränkt, im Innenraum des Hohlkörpers angeordnet sein, wobei der Durchmesser des Innenraums des Hohlkörpers dazu vorzugsweise größer ist als der/die äußere/n Durchmesser des/der Lichtleiter/s, der/die im Innenraum angeordnet ist/sind. Im Rahmen der Erfindung wird unter der Bezeichnung "Innenraum" der Volumenbereich verstanden, der durch die Wandung des Hohlkörpers nach außen hin abgegrenzt ist, wobei die Wandung des Hohlkörpers auch doppelwandig ausgestaltet sein kann.

In einer Ausgestaltung des Hohlkörpers ist dieser doppelwandig ausgestaltet und der/die Lichtleiter ist/sind innerhalb dieser Doppelwand des Hohlkörpers angeordnet.

Dadurch kann vorteilhaft beispielsweise ein zusätzlicher Schutz des/der Lichtleiter/s vor mechanischer oder chemischer Schädigung bewirkt werden.

In einer weiteren Ausgestaltung der Erfindung ist ein oder sind mehrere Lichtleiter von außen komplett oder teilweise um die Wand oder Außenhülle des Hohlkörpers herum angeordnet und/oder umhüllen diesen Hohlkörper teilweise oder komplett in Form einer Ummantelung.

In einer Ausgestaltung des Hohlkörpers weist dieser einen oder mehrere Lichtleiter auf, die Licht gleicher oder unterschiedlicher Wellenlängen, Intensitäten und Leistung steuerbar ausstrahlen, wobei das Licht gepulst, kontinuierlich oder auch stufenweise, ausgelöst von der jeweiligen Photonenquelle, von den Lichtleitern abgegeben werden kann und dabei unterschiedliche photoneninduzierte Modifikationen des Materials bewirken kann.

In einer weiteren alternativen Ausgestaltung des Hohlkörpers weist der Hohlkörper neben den Lichtleitern, wenigstens eine oder mehrere Kapillare/n und/oder Röhrchen, beispielsweise jedoch nicht darauf beschränkt 2 bis 10, auf, die, genauso wie zuvor für die Lichtleiter beschrieben, entweder in den Hohlkörper oder Injektor integriert sind, insbesondere im Innenraum oder im Innenvolumen, und/oder von außen am Hohlkörper oder Injektor angeordnet sind. Jegliche Anordnungsmöglichkeiten, die zuvor für die Lichtleiter beschrieben wurden, können daher auch für die Anordnung einer oder mehrerer Kapillare/n und/oder eines oder mehrerer Röhrchen ausgeführt werden.

Diese Kapillaren und/oder Röhrchen können dazu dienen, ein zusätzliches Einbringen und/oder einen zusätzlichen Hin- und/oder Weg-Transport von weiterem Material zu ermöglichen, welches beispielsweise entweder photochemisch oder photothermisch modifiziert werden soll, und/oder, welches zusätzlich eine photoneninduzierte Modifikation beeinflussen kann und/oder Material zu entfernen, wie beispielsweise Reaktionsprodukt/e, die aus oder bei der photoneninduzierten Modifikation entstehen. So kann beispielswiese ein photoneninduzierter Reaktionsprozess am Zielort, wie beispielsweise ein photochemisches Ätzen eines/einer GaN-Substrats/GaN-Schicht, mit einem eingebrachten Material, welches als Reaktionsedukt für diesen Reaktionsprozess erforderlich ist, hier KOH für das Ätzen der/des GaN-Schicht/GaN-Substrats, mit Hilfe der Kapillaren und/oder Röhrchen an den Zielort transportiert werden und unter der für die Reaktion erforderlichen Photonenenergie, hier UV-Licht, welches von den Lichtleitern am Zielort austritt, photoneninduziert induziert werden.

Die Lichtleiter können z.B. aus optischen Fasern aus Kunststoffen z.B. PMMA, Polycarbonat, oder aus Glas (Silica, pures SiO₂ (Wellenlängenbereich zwischen 0,3-3µm) bzw. Glasfasern, Fluorid- Glas (Wellenlängenbereich zwischen 0,5-5µm), KCl (Wellenlängenbereich zwischen 0,4-18µm) bestehen. Sie können unterschiedliche Wellenlängenbereiche, in denen sie bevorzugt eingesetzt werden, aufweisen (wegen der Dämpfung/Dispersion). Weiterhin können die Lichtleiter auch aus einem Mehrkomponentensystem, umfassend Glas, beispielsweise aus SiO₂, GeO₂, NaO₂, CaO, Li₂O, MgO, und/oder Saphir bestehen. Die Lichtleiter können aus einem Kern bestehen, der von mindestens einem transparenten Material (Mantel) mit niedrigem Brechungsindex umgeben ist. Dadurch wird vorteilhaft eine interne Totalreflektion bewirkt, so dass das Licht im Kern verbleibt und erst an der Lichtaustrittsöffnung wieder austreten kann.

Der obere Abschnitt des Hohlkörpers kann mit einer Halterung verbunden sein, so ist es beispielsweise möglich, dass der Hohlkörper mit einer Spritze oder mit einer anderen Halterung verbunden ist, die zusätzlich oder wahlweise noch eine Photonenquelle aufweist. Dabei kann der obere Abschnitt des Hohlkörpers auf diese Halterung aufgesteckt sein. In einer vorteilhaften Ausführung ist der Hohlkörper so ausgestaltet, dass der Hohlkörper insgesamt oder ein Teil oder Teile des Hohlkörpers wiederverwertet werden. Dafür müssten beispielsweise Teile des Hohlkörpers, z.B. der obere Abschnitt durch eine Verschraubung oder Ähnliches vom unteren Abschnitt entfernbar sein. Andererseits ist es auch denkbar, dass der Hohlkörper zur einmaligen Nutzung gefertigt ist.

Der Hohlkörper selbst kann beispielsweise aus Glas/Quarzglas, auch in Form von Kapillaren und/oder Röhrchen, Metall und/oder Kunststoff bestehen, wobei das Material nicht mit dem zu verändernden Material reagieren sollte bzw. gegenüber dem Material, welches modifiziert werden soll, chemisch inert ist.

Die Erfindung betrifft weiterhin eine Anordnung, die auch als Array bezeichnet werden kann, zur Aufnahme von Material und/oder zum Transport von Material an einen Zielort oder von einem Zielort weg, an dem lokal eine photoneninduzierte Modifikation oder ein photoneninduzierter Prozess des Materials erfolgt, umfassend mehr als einen der zuvor beschriebenen erfindungsgemäßen Hohlkörper, die jeweils mit einer Photonenquelle verbunden sind, und wobei die jeweiligen Photonenquellen der Hohlkörper Licht gleicher oder unterschiedlicher Wellenlängen, Intensitäten oder Leistung aussenden können. Die Hohlkörper der Anordnung können dabei als Bündel von Hohlköpern angeordnet sein, die sowohl gleiche als auch unterschiedliche Materialien aufnehmen und transportieren können, sowie auch an unterschiedliche oder gleiche Photonenquellen angeschlossen sind, so dass die Lichtleiter der mehreren Hohlkörper sowohl Licht gleicher als auch unterschiedlicher Wellenlängen, Intensitäten oder Leistung an den Zielort abgeben können.

Als Materialien, die mit dem erfindungsgemäßen Hohlkörper oder der Anordnung photoneninduziert modifiziert werden können, können beispielhaft, jedoch nicht darauf beschränkt, Monomere, die photoneninduziert polymerisieren (Photopolymere) wie z. B. Vinylmonomere [1], anorganische und organische Photolacke wie Wasserstoffsilsesquioxane, PMMA, Novolak, Polymethylglutarimid, Epoxidharze [2], für die Strukturierung; Texturierung und Lithographie, Komposit-Materialien aus Polymeren für die Zahnfüllung wie z. B., Bis-GMA (Bowen monomer), TEGMA, UDMA, Bis-EMA [3] zusammen mit anorganischen Füllmaterialien wie SiO₂ sowie für die Orthopädie wie z. B. PEEK zusammen mit Fasermaterialien [4], z. B. Monomere und Oligomere Methacrylate sowie biobasierte Monomere/Oligomere wie Glycerol Diglycidyl Äther und epoxidiertes Leinsamenöl für 3-D Drucken [5], Bio-/Kollagen- mimetische Proteine [6], [7] für den Einsatz in der regenerativen Medizin genannt werden.

Die Erfindung betrifft weiterhin ein Verfahren zur Aufnahme und zum Hin und/oder Weg-Transport von Material an einen Zielort, an dem lokal eine photoneninduzierte oder thermische Modifikation oder ein photoneninduzierter Prozess des Materials erfolgt, umfassend folgende Verfahrensschritte:
a) Einbringen des Materials, welches photoneninduziert oder thermisch lokal am Zielort modifiziert werden soll oder welches lokal am Zielort mit Hilfe eines photoneninduzierten Prozesses modifiziert werden soll, in den Innenraum der/des zuvor beschriebenen erfindungsgemäßen Hohlkörper/s oder der zuvor beschriebenen Anordnung;
b) Transport des Materials an die Öffnung des Hohlkörpers oder der Anordnung;
c) Anschließen einer Photonenquelle an den/die Lichtleiter des Hohlkörpers oder der Anordnung und/oder
d) Einschalten der Photonenquelle und lokale Einstrahlung der Photonenenergie aus der Photonenquelle über den/die Lichtleiter auf das Material am Zielort an der Öffnung des Hohlkörpers zur gezielten photoneninduzierten Modifikation des Materials am Zielort an der Öffnung des Hohlkörpers.

Der Transport des Materials durch den Hohlköper oder durch die Anordnung zum Zielort an der Öffnung des Hohlkörpers gemäß Verfahrensschritt b) kann durch Ausüben von Druck auf den Innenraum des Hohlkörpers oder der Anordnung im oberen Abschnitt des/der Hohlkörper/s erfolgen. So könnte über einen Druckunterschied das Material passiv transportiert werden, aber auch aktiv über einen Druckregler oder einen Flussregler, wobei das Material dann aus einem Vorratsgefäß zugeführt würde.

Alternativ kann der Transport des Materials gemäß Verfahrensschritt b) auch durch Aufnehmen oder Ansaugen des Materials an die Öffnung des Hohlkörpers erfolgen.

Neben dem Einbringen und dem Transport von Material direkt durch den Innenraum des Hohlkörpers kann im Innenraum des Hohlkörpers und/oder auf der Außenseite des Hohlkörpers, durch eine oder mehrere dort zusätzlich angeordnete Kapillare/n und/oder Röhrchen, ein zusätzliches Einbringen und/oder ein zusätzlicher Hin- oder Weg-Transport von weiterem Material erfolgen, welches entweder photoneninduziert oder thermisch modifiziert werden soll, und/oder von Material erfolgen, welches zusätzlich die photoneninduzierte oder thermische Modifikation beeinflusst und/oder ein Transport von Material erfolgen, welches entfernt werden soll, da es beispielsweise als Reaktionsprodukt aus oder bei der photoneninduzierten oder thermischen Modifikation entsteht.

Die Einstrahlung der Photonenenergie aus der Photonenquelle auf den/die Lichtleiter erfolgt, vorzugsweise zentral, über der Lichteingangsöffnung des/der Lichtleiter/s.

Der Transport der Menge des Materials zur Öffnung des Hohlkörpers kann vorzugsweise in Abhängigkeit der eingestrahlten Photonenenergie, die durch die Lichtleiter auf die Öffnung am Zielort trifft, gesteuert werden.

Die Transportrichtung des Materials kann sowohl mit Lichteinstrahlrichtung aus dem Lichtleiter erfolgen als auch entgegen der Lichteinstrahlrichtung aus dem Lichtleiter. Bei einem mit oder gegen die Lichteinstrahlrichtung des Lichtleiters erfolgten Aufnehmen oder Ansaugen von Material kann die Lichteinstrahlung aus dem Lichtleiter, je nach chemischer oder thermischer Reaktion, die Diffusionseigenschaften des Materials beeinflussen, d.h. erhöhen oder verlangsamen. Weiterhin kann es vorteilhaft sein zum einen, einen Transport von Material mit, als auch gegen Lichteinstrahlichtung durchzuführen. So kann beispielsweise die Zugabe eines Ätzmittels in Lichteinstrahlrichtung erfolgen, sodass am Zielort die Reaktion photoneninduziert wird und das Aufnehmen oder Absaugen von Reaktionsprodukten kann entgegen der Lichteinstrahlrichtung erfolgen.

Es wird beispielsweise Material eingesetzt, welches photoneninduzierbar ist, insbesondere Photopolymere, anorganische und/oder organische Photolacke, Epoxidharze, Komposit-Materialien aus Polymeren, anorganische Füllmaterialien, zusammen mit Fasermaterialien, epoxidiertes Leinsamenöl für 3D-Drucker, Bio-Kollagene oder mimetische Proteine. Es kann aber auch Material eingesetzt werden, welches als Reaktionsedukt wirkt und zusammen mit einem Material am Zielort, eine photoneninduzierte Reaktion am Zielort eingeht.

Als Photonenquellen können beispielsweise gepulste und nicht-gepulste Leuchtdioden und/oder Laser eingesetzt werden. Die Photonenquelle kann dabei außerhalb oder im Innenraum des Hohlkörpers angebracht sein und zentral über dem/den Lichtleitern angeordnet sein oder über Kopplungsstücke an den/die Lichtleiter angekoppelt werden.

Die Photonenenergie, die eingestrahlt wird, kann so eingestellt werden, dass sie der Energie entspricht, die für die Modifikation des Materials benötigt wird. Die Wellenlängenbereiche, Intensitäten oder die Leistung, die bevorzugt für die Photonenquellen eingesetzt oder eingestellt werden, sind abhängig von der Energie, die für die chemische und/oder thermische Reaktion benötigt wird. Es ist notwendig, dass die Energie vom Material absorbiert wird. Die Energie der Photonenquelle muss größer sein als die Energie, die benötigt wird um die photoneninduzierte Modifikation in Gang zu setzen. In einer vorteilhaften Ausführung des Verfahrens kann jeweils Licht mit unterschiedlichen Wellenlängenbereichen, Intensitäten oder Leistungen in die Lichtleiter eingestrahlt werden, sodass hier eine weitere Steuerung der photoneninduzierten Modifikation ermöglicht wird, wie beispielsweise eine spezifische Reaktionsinduzierung durch Einstrahlung einer spezifischen Wellenlänge erreicht wird oder um die Diffusionseigenschaften bestimmter Materialien mit Licht spezifischer Wellenlängen zu beeinflussen, d.h. zu erhöhen oder zu verlangsamen.

Die photoneninduzierte Modifikation des Materials kann durch Zugabe von Initiatoren (z. B. Peroxide, Azo-Verbindungen, Verbindungen, die unter Licht freie Radikale bilden), die die Reaktion in Gang setzen, durch Inhibitoren (z.B. Quinone, Quinon-Methide, Sauerstoff), die die Reaktion verlangsamen oder verhindern und/oder durch Katalysatoren (z. B. metallorganische Komplexverbindungen, Ziegeler-Natta Katalysatoren: z.B. TiCl₃ + Diethylaluminiumchlorid; TiCl₄ + Triethylaluminium), die die Aktivierungsenergie herabsetzen, zusätzlich gesteuert werden. Zur Verhinderung einer photoneninduzierten Modifikation im Öffnungsbereich des Hohlkörpers oder der Anordnung, bei der dann eine Verstopfung der Öffnung erfolgen könnte, kann auch ein zusätzlicher Hohlkörper genutzt werden, der mit einem entsprechenden Lösungsmittel gefüllt ist, sodass ein Spülen des Bereichs durchgeführt werden kann, in dem keine Modifikation des Materials erfolgen soll. Die Zugabe von weiteren Substanzen, wie beispielsweise Initiatoren, Inhibitoren, Katalysatoren, kann auch mit Hilfe der Kapillaren und/oder Röhrchen des Hohlkörpers erfolgen.

Das Verfahren kann daher über die Energie der Photonenquelle, insbesondere das Licht mit unterschiedlichen Wellenlängen, Lichtintensitäten und Lichtleistungen (über eine Leistungsregelung) und über die Zufuhr der Materialmenge, über ein Ventil/einen Flussregler/Druckregler, gesteuert und aufeinander abgestimmt werden.

Eine weitere Steuerung des Verfahrens kann auch über das Einschalten von Photonenquellen zu unterschiedlichen Zeitpunkten, beispielsweise über ein gepulstes Einschalten oder über ein sequentielles Einschalten, erfolgen und/oder über das Einschalten und Zuschalten von weiteren Photonenquellen erfolgen, die Licht mit unterschiedlichen oder gleichen Wellenlängen, Lichtintensitäten und Lichtleistungen ausstrahlen. Auch über das Einbringen von unterschiedlichen Materialien, die photoneninduzierbar sind und/oder durch Einbringen von Materialien, welche als Reaktionsedukte wirken und zusammen mit einem Material am Zielort, eine photoneninduzierte Reaktion am Zielort eingehen und/oder durch Zugabe der zuvor genannten Initiatoren und/oder Inhibitoren und/oder Katalysatoren kann eine Steuerung des Verfahrens erfolgen.

### Referenzen

[1] B. Strehmel, Photopolymere in der Industrie, Nachrichten Aus Der Chemie. 62 (2014) 128-133. https://doi.org/10.1002/nadc.201490044.
[2] C. Decker, T. Nguyen Thi Viet, and H. Pham Thi, "Photoinitiated cationic polymerization of epoxides," Polym. Int., vol. 50, no. 9, pp. 986-997, Sep. 2001.
[3] I. D. Sideridou and D. S. Achilias, "Elution study of unreacted Bis-GMA, TEGDMA, UDMA, and Bis-EMA from light-cured dental resins and resin composites using HPLC," J. Biomed. Mater. Res. Part B Appl. Biomater., vol. 74B, no. 1, pp. 617-626, Jul. 2005.
[4] K. Fujihara et al., "Fibrous composite materials in dentistry and orthopaedics: review and applications," Compos. Sci. Technol., vol. 64, no. 6, pp. 775-788, May 2004.
[5] E. Skliutas, S. Kasetaite, L. Jonušauskas, J. Ostrauskaite, and M. Malinauskas, "Photosensitive naturally derived resins toward optical 3-D printing," Opt. Eng., vol. 57, no. 04, p. 1, Apr. 2018.
[6] P. A. Parmar et al., "Collagen-mimetic peptide-modifiable hydrogels for articular cartilage regeneration," Biomaterials, vol. 54, pp. 213-225, Jun. 2015.
[7] J.-D. Malcor et al., "The synthesis and coupling of photoreactive collagen-based peptides to restore integrin reactivity to an inert substrate, chemically-crosslinked collagen," Biomaterials, vol. 85, pp. 65-77, Apr. 2016.

### Spezieller Beschreibungsteil

Nachfolgend wird der Gegenstand der Erfindung an Hand von Figuren erläutert, ohne, dass der Gegenstand der Erfindung hierdurch auf diese Ausführungsbeispiele beschränkt wird.

Es wird gezeigt:
- Figur 1:: schematische Darstellung des erfindungsgemäßen Hohlkörpers
- Figur 2:: Querschnitt a) und Längsschnitt b) durch Hohlkörper mit einem Lichtleiter im Innenraum im Zustand mit Licht
- Figur 3:: Querschnitt a) und Längsschnitt b) durch Hohlkörper mit einem Lichtleiter im Innenraum im Zustand ohne Licht
- Figur 4:: Querschnitt a) und Längsschnitt b) durch Hohlkörper mit einem Lichtleiter im Innenraum im Zustand ohne Licht und Material, welches transportiert wird
- Figur 5:: Querschnitt a) und Längsschnitt b) durch Hohlkörper mit einem Lichtleiter im Innenraum im Zustand mit Licht und Material, welches mit Lichteinstrahlrichtung transportiert wird
- Figur 6:: Querschnitt a) und Längsschnitt b) durch Hohlkörper mit einem Lichtleiter im Innenraum im Zustand ohne Licht und Material, welches gegen Lichteinstrahlrichtung transportiert wird
- Figur 7:: Querschnitt a) und Längsschnitt b) durch Hohlkörper mit einem Lichtleiter im Innenraum im Zustand mit Licht und Material, welches gegen Lichteinstrahlrichtung transportiert wird
- Figur 8:: Querschnitt durch Hohlkörper mit sieben Lichtleitern im Innenraum
- Figur 9:: Querschnitt durch Hohlkörper mit sieben Lichtleitern im Innenraum, die unterschiedliche Wellenlängen ausstrahlen
- Figur 10:: Querschnitt durch Hohlkörper mit fünf Lichtleitern und zwei Kapillaren und/oder Röhrchen im Innenraum
- Figur 11:: Querschnitt durch Hohlkörper mit mehreren Lichtleitern angeordnet im Innenraum der Doppelwand des Hohlkörpers
- Figur 12:: Querschnitt durch Hohlkörper mit mehreren Lichtleitern und 2 Kapillaren und/oder Röhrchen angeordnet im Innenraum der Doppelwand des Hohlkörpers
- Figur 13:: Querschnitt durch Hohlkörper mit einem Lichtleiter angeordnet im kompletten Innenraum der Doppelwand des Hohlkörpers
- Figur 14:: Querschnitt durch Hohlkörper mit mehreren Lichtleitern angeordnet um die Außenhülle des Hohlkörpers
- Figur 15:: Querschnitt durch Hohlkörper mit mehreren Lichtleitern und 3 Kapillaren und/oder Röhrchen angeordnet um die Außenhülle des Hohlkörpers
- Figur 16:: Querschnitt durch Hohlkörper mit einem Lichtleiter angeordnet um die Außenhülle des Hohlkörpers
- Figur 17:: Querschnitt a) sowie Längsschnitt b) durch Hohlkörper mit einem rechteckigen Querschnitt, mit zwei Lichtleitern sowie zwei Kapillaren und/ oder Röhrchen im Innenraum des Hohlkörpers
- Figur 18: Querschnitt durch Hohlkörper mit acht Lichtleitern und acht Kapillaren und/oder Röhrchen im Innenraum, die reihenartig angeordnet sind
- Figur 19: Querschnitt durch Hohlkörper mit acht Lichtleitern und acht Kapillaren und/oder Röhrchen im Innenraum, die alternierend angeordnet sind

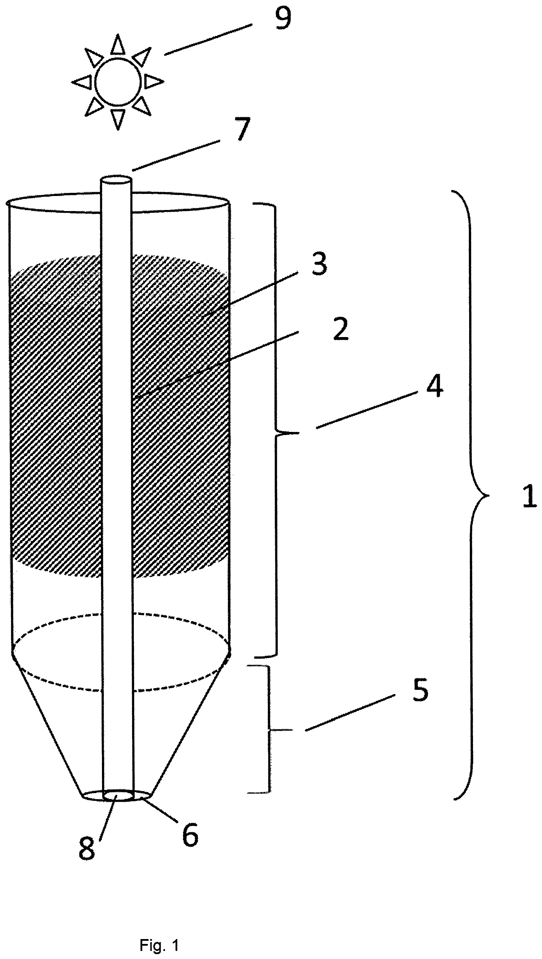

Figur 1 zeigt eine schematische Darstellung des Hohlkörpers 1, welcher in einen oberen Abschnitt 4 und einen unteren Abschnitt 5 eingeteilt werden kann. Im Innenraum des Hohlkörpers 1 ist ein Lichtleiter 2 angeordnet, der eine Lichteingangsöffnung 7 und eine Lichtausgangsöffnung 8 aufweist. Die Lichtausgangsöffnung 8 ist an der Öffnung 6 des Hohlkörpers 1 am unteren Abschnitt 5 angeordnet, wobei Lichtausgangsöffnung 8 und die Öffnung 6 des Hohlkörpers 1 am selben Zielort münden. Die Lichteingangsöffnung 7 des Lichtleiters 2 ist an einer Photonenquelle 9 angeordnet, so dass das Licht aus der Photonenquelle 9 durch den Lichtleiter 2 hindurch erst an der Lichtausgangsöffnung 8 lokal an dem gewünschten Zielort wieder austreten kann. Weiterhin befindet sich im Innenraum des Hohlkörpers 1 das Material 3, welches durch den Hohlkörper 1 transportiert und erst am Zielort, wo die Lichtausgangsöffnung 8 und die Öffnung 6 des Hohlkörpers 1 münden, photoneninduziert modifiziert wird, wenn die Photonenquelle 9 eingeschaltet und/oder angeschlossen wird und die definiert eingestellte Menge des Materials 3 durch den Innenraum des Hohlkörpers 1 zur Öffnung 6 transportiert wurde.

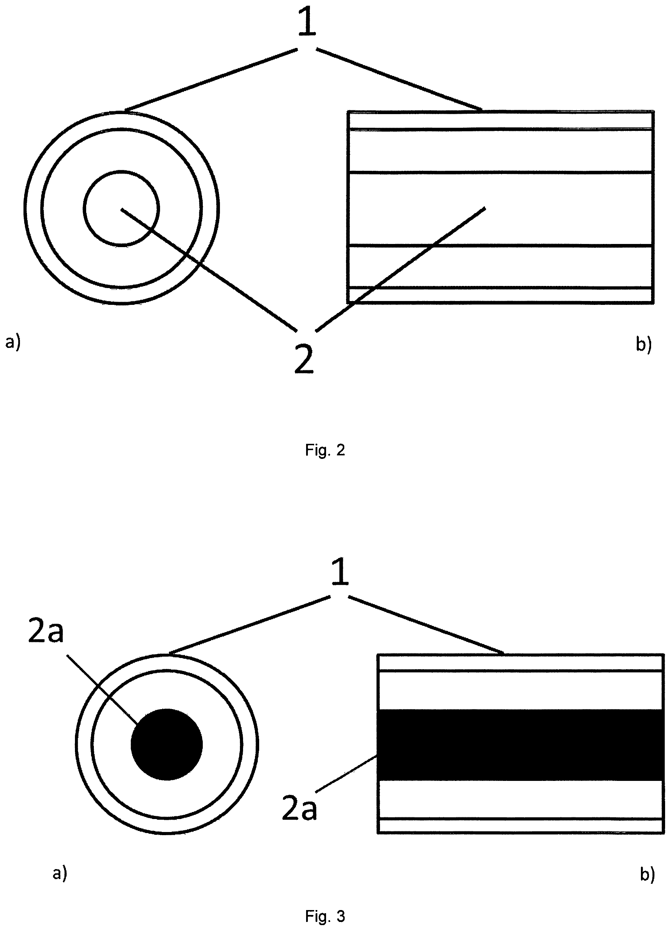

Figur 2 zeigt einen Querschnitt a) und einen Längsschnitt b) durch den Hohlkörper 1 mit Lichtleiter 2 im Innenraum des Hohlkörpers 1 im Zustand mit Licht. In dieser Ausführung befindet sich ein Lichtleiter 2 zentral im Innenraum des Hohlkörpers 1.

Figur 3 zeigt einen Querschnitt a) und einen Längsschnitt b) durch den Hohlkörper 1 mit einem Lichtleiter 2 zentral im Innenraum, wobei hier der Lichtleiter 2 im Zustand ohne Licht, gekennzeichnet durch das Bezugszeichen 2a, dargestellt ist.

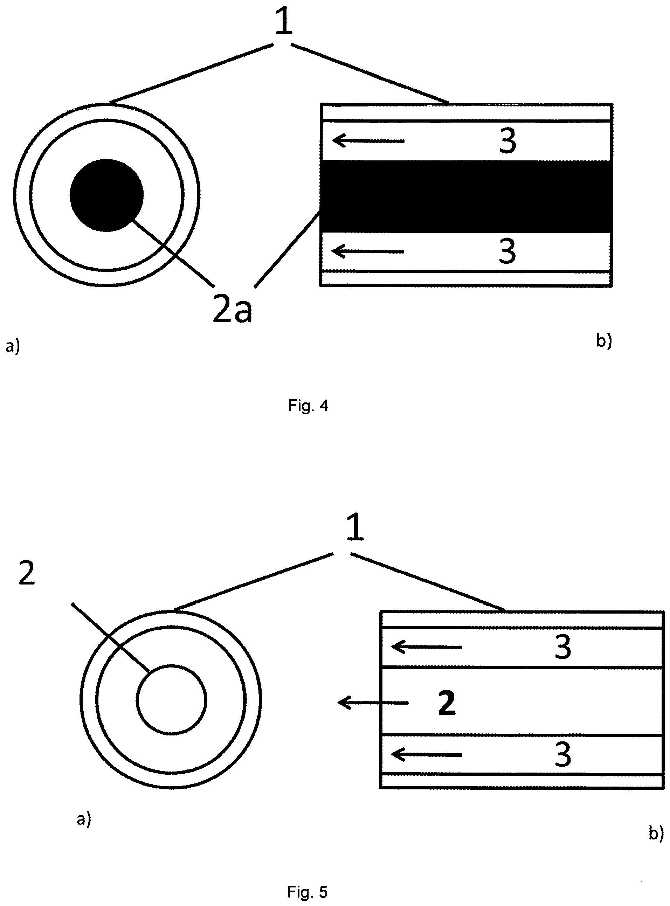

Figur 4 zeigt einen Querschnitt a) und einen Längsschnitt b) durch den Hohlkörper 1 mit einem Lichtleiter 2a im Innenraum im Zustand ohne Licht und wobei hier im Innenraum des Hohlkörpers 1 das Material 3, welches zur Öffnung 6 transportiert, in der Figur dargestellt durch Pfeile, und modifiziert werden soll, den Lichtleiter 2a umgibt.

Figur 5 zeigt einen Querschnitt a) und einen Längsschnitt b) durch den Hohlkörper 1 mit Lichtleiter 2 im Innenraum im Zustand mit Licht, wobei hier das Material 3, welches transportiert und modifiziert werden soll, zusammen mit der Lichteinstrahlrichtung transportiert wird, in der Figur 5 b) hier dargestellt durch die entsprechenden Pfeile. Da der Lichtleiter 2 sein Licht erst an der Lichtaustrittsöffnung 8 abgibt, kann im Innenraum des Hohlkörpers 1 selbst noch keine photoneninduzierte Reaktion und Modifikation des Materials 3 stattfinden.

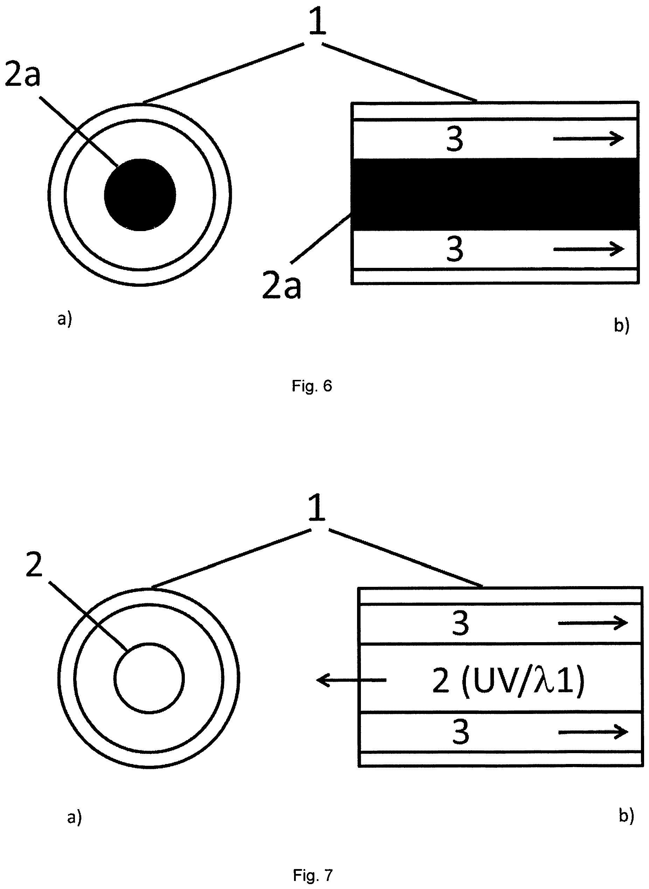

Figur 6 zeigt einen Querschnitt a) und einen Längsschnitt b) durch den Hohlkörper 1 mit einem zentralen Lichtleiter 2a im Innenraum, im Zustand ohne Licht, und Material 3, welches gegen die Lichteinstrahlrichtung des Lichtleiters 2a transportiert wird.

Figur 7 zeigt einen Querschnitt a) und einen Längsschnitt b) durch den Hohlkörper 1 mit einem zentralen Lichtleiter 2 im Innenraum, im Zustand mit Licht im UV- Lichtbereich oder Licht einer gewünschten Wellenlänge λ1, und Material 3, welches gegen die Lichteinstrahlrichtung des Lichtleiters 2 transportiert wird, in der Figur 7 b) hier dargestellt durch die entsprechenden Pfeile. Bei einem Transport gegen die Lichteinstrahlrichtung des Lichtleiters 2 kann beispielsweise ein Aufnehmen oder ein Ansaugen von Material 3 an der Öffnung 6 des Hohlkörpers 1 erfolgen.

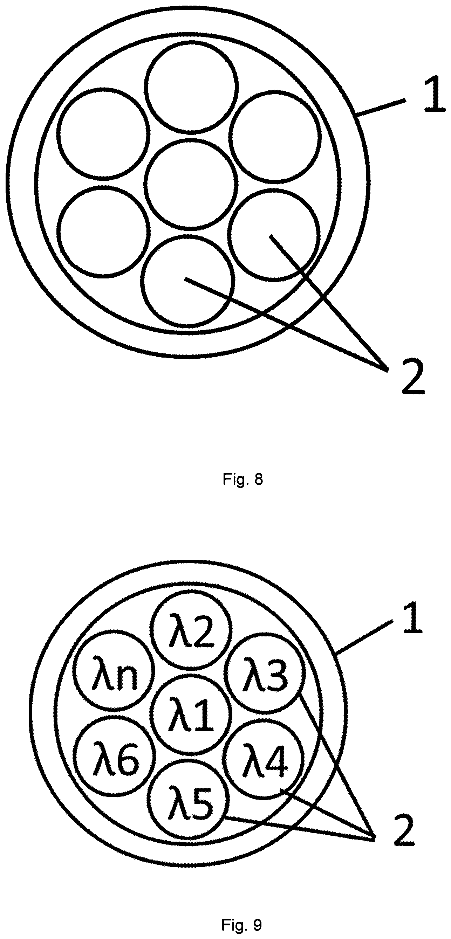

Figur 8 zeigt einen Querschnitt durch den Hohlkörper 1 mit mehreren Lichtleitern 2 im Innenraum des Hohlkörpers 1, die in Form eines Lichtleiterbündels angeordnet sind.

Figur 9 zeigt einen Querschnitt durch den Hohlkörper 1 mit mehreren Lichtleitern 2 im Innenraum des Hohlkörpers 1, die unterschiedliche Wellenlängen λn, λ1, λ2, λ2, λ3, λ4, λ5 oder λ6 ausstrahlen können.

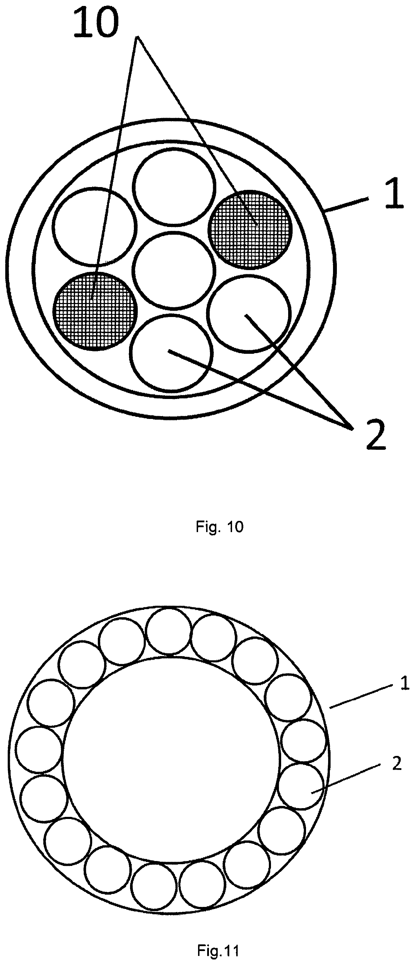

Figur 10 zeigt einen Querschnitt durch den Hohlkörper 1 mit fünf Lichtleitern 2 sowie zwei Kapillaren und/oder Röhrchen 10, die im Innenraum des Hohlkörpers 1 angeordnet sind.

Figur 11 zeigt einen Querschnitt durch den Hohlkörper 1, der in diesem Ausführungsbeispiel doppelwandig ausgestaltet ist, mit mehreren Lichtleitern 2, die hier im Innenraum dieser Doppelwand des Hohlkörpers 1 angeordnet sind. Diese Lichtleiter 2 können, abhängig von dem von der Photonenquelle abgegebenen Licht, sowohl Licht unterschiedlicher als auch gleicher Wellenlänge an ihrer jeweiligen Lichtausgangsöffnung 8 (hier nicht dargestellt) abgeben.

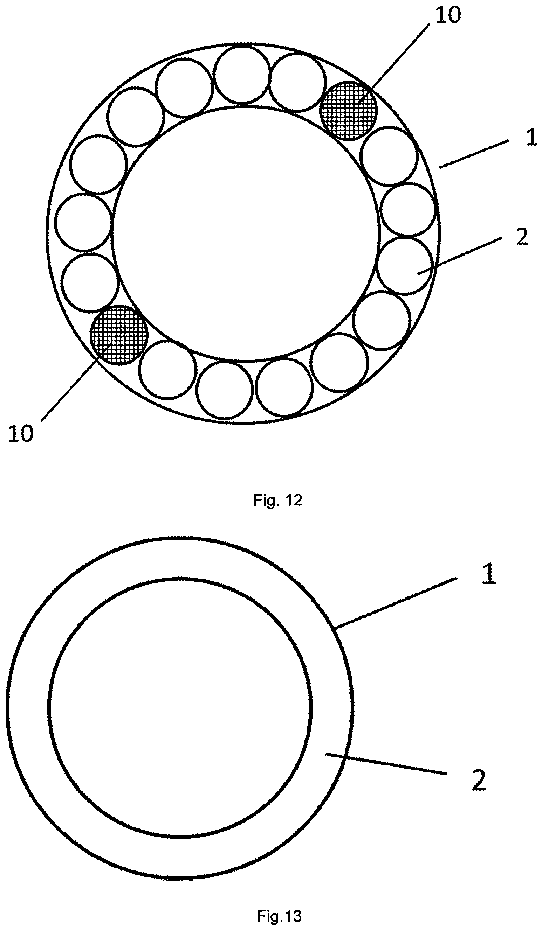

Figur 12 zeigt einen Querschnitt durch den Hohlkörper 1, der in diesem Ausführungsbeispiel doppelwandig ausgestaltet ist, mit mehreren Lichtleitern 2 sowie zwei Kapillaren und/oder Röhrchen 10, die hier im Innenraum dieser Doppelwand des Hohlkörpers 1 angeordnet sind.

Figur 13 zeigt einen Querschnitt durch den Hohlkörper 1, der in diesem Ausführungsbeispiel ebenfalls doppelwandig ausgestaltet ist, wobei hier, im Gegensatz zur Ausführung gemäß Figur 11 oder 12, nur ein einziger Lichtleiter 2 ringförmig im Innenraum der Doppelwand des Hohlkörpers 1 angeordnet ist bzw. diesen Innenraum der Doppelwand des Hohlkörpers 1 komplett ausfüllt..

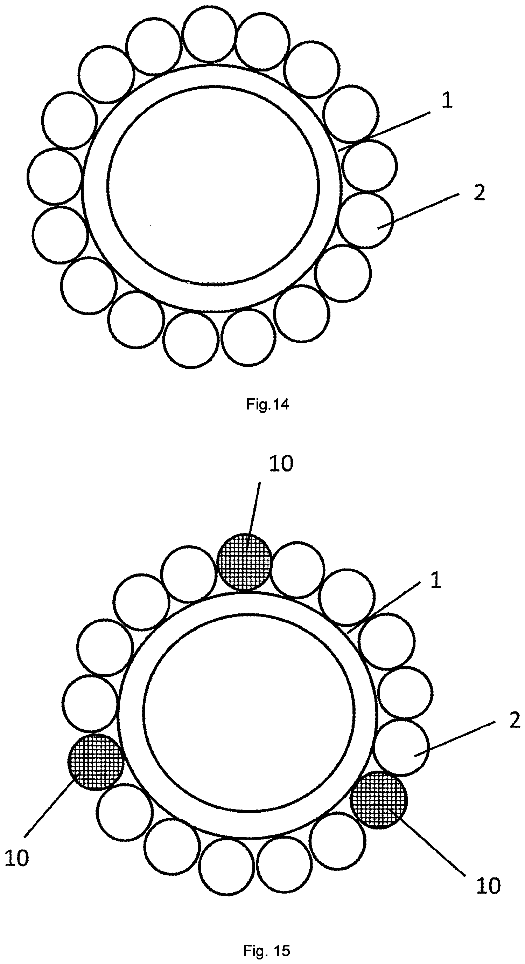

Figur 14 zeigt einen Querschnitt durch den Hohlkörper 1, mit mehreren Lichtleitern 2, die um die Außenhülle des Hohlkörpers 1 angeordnet sind. Diese Lichtleiter 2 können, abhängig von dem von der Photonenquelle abgegebenen Licht, sowohl Licht unterschiedlicher als auch gleicher Wellenlänge an ihrer jeweiligen Lichtausgangsöffnung 8 (hier nicht dargestellt) abgeben.

Figur 15 zeigt einen Querschnitt durch den Hohlkörper 1, mit mehreren Lichtleitern 2 sowie drei Kapillaren und/oder Röhrchen 10, die um die Außenhülle des Hohlkörpers 1 angeordnet sind.

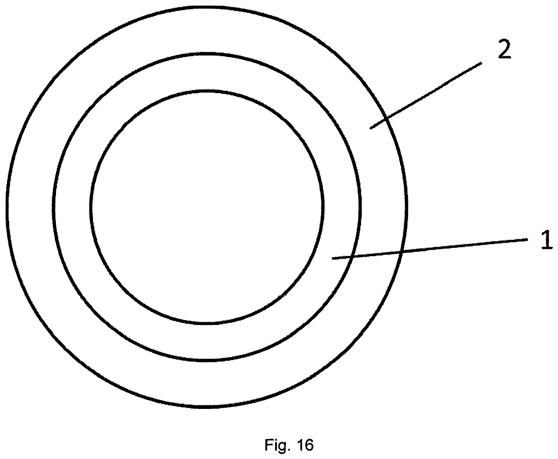

Figur 16 zeigt einen Querschnitt durch den Hohlkörper 1, bei dem, im Gegensatz zu der in Figur 14 und 15 dargestellten Ausführung, nur ein Lichtleiter 2 ringförmig um die Außenhülle des Hohlkörpers 1 angeordnet ist.

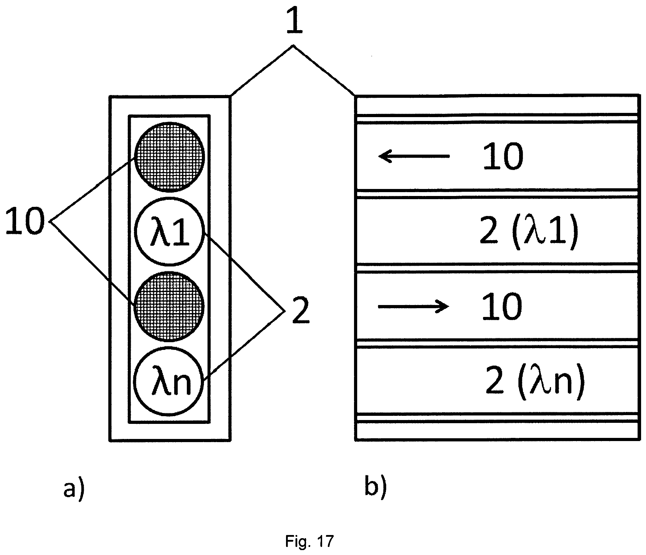

Figur 17 zeigt einen Querschnitt a) sowie einen Längsschnitt b) durch den Hohlkörper 1 mit einem rechteckigen Querschnitt, bei dem im Innenraum des Hohlkörpers 1 neben zwei Lichtleitern 2, zwei Kapillaren und/oder Röhrchen 10 angeordnet sind, durch die zusätzlich Material 3, zum Zielort hin oder vom Zielort weg transportiert werden kann, dargestellt durch die jeweiligen Pfeile im Innenraum der Kapillaren und/ oder Röhrchen 10 im Längsschnitt 17b) der Figur.

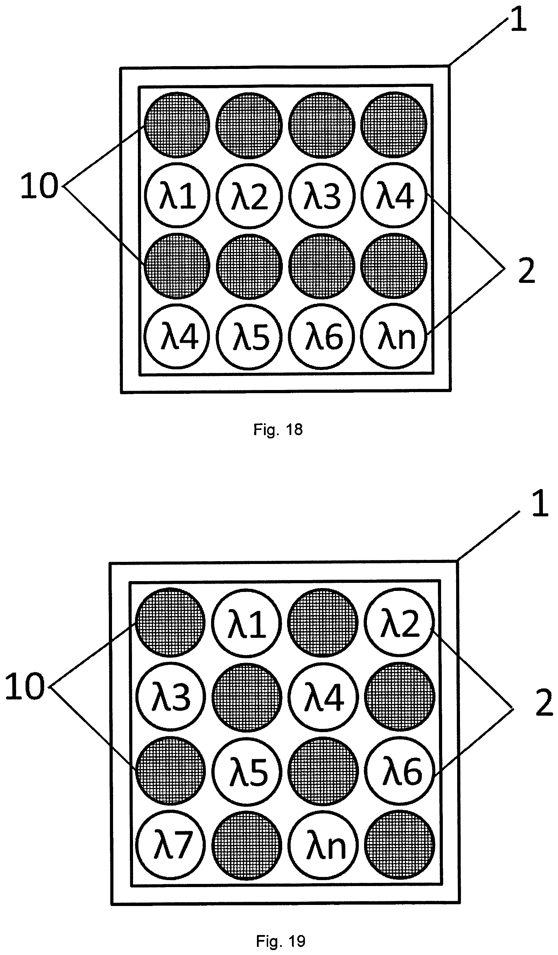

Figur 18 zeigt einen Querschnitt a) durch den Hohlkörper 1 mit einem rechteckigen Querschnitt, bei dem im Innenraum des Hohlkörpers 1 neben acht Lichtleitern 2, acht Kapillaren und/oder Röhrchen 10 reihenartig angeordnet sind. Die Anordnung der Lichtleiter 2 und Kapillaren und/oder Röhrchen 10 kann generell in beliebiger Form und Anordnung erfolgen, wobei in einer vorteilhaften Form durch eine definierte Anordnung der Lichtleiter 2 und Kapillaren und/oder Röhrchen 10, hier beispielsweise in Reihe, am Zielort lokal eine gewünschte photoneninduzierte Reaktion mit einem dadurch definierbaren Muster, einer definierbaren Texturierung, geometrischen Form oder Strukturierung je nach photoneninduzierter Reaktion erzeugt werden kann. Mit einer reihenartigen Anordnung der Lichtleiter 2 und Kapillaren und/oder Röhrchen 10 kann dann beispielsweise eine streifenförmige Texturierung, geometrische Formgebung oder Strukturierung erzeugt werden.

Figur 19 zeigt ähnlich wie Figur 18 einen Querschnitt a) durch den Hohlkörper 1 mit einem rechteckigen Querschnitt, bei dem im Innenraum des Hohlkörpers 1 neben acht Lichtleitern 2, acht Kapillaren und/oder Röhrchen 10 alternierend angeordnet sind, so dass hier eine schachbrettmusterartige Texturierung, geometrische Formgebung oder Strukturierung erzeugt werden kann.

Alternativ können aber nicht nur die Ausgestaltungen der Vorrichtung mit Kapillaren und/oder Röhrchen 10 für eine gezielte und definierbar einstellbare Musterung, eine definierbare Texturierung, eine Herstellung geometrischer Formen oder Strukturierungen eingesetzt werden, sondern generell auch die erfindungsgemäße Vorrichtung oder Anordnung ohne die zusätzlichen Kapillaren.

### Bezugszeichenliste:

- 1:: Hohlkörper
- 2:: Lichtleiter
- 2a:: Lichtleiter im Zustand ohne Licht
- 3:: Material, welches transportiert und photoneninduziert modifiziert wird
- 4:: oberer Abschnitt des Hohlkörpers
- 5:: unterer Abschnitt des Hohlkörpers
- 6:: Öffnung des Hohlkörpers
- 7:: Lichteingangsöffnung Lichtleiter
- 8:: Lichtausgangsöffnung Lichtleiter
- 9:: Photonenquelle
- 10:: Kapillare und/oder Röhrchen

## Patentansprüche

1. Vorrichtung, umfassend einen Hohlkörper (1) zur Aufnahme von Material (3) in den Innenraum des Hohlkörpers (1) und/oder zum Transport von Material (3) vom Innenraum des Hohlkörpers (1) an einen Zielort oder von einem Zielort weg, an dem lokal eine photoneninduzierte Modifikation des Materials (3) erfolgt, mit einem oberen Abschnitt (4) des Hohlkörpers (1) und einem unteren Abschnitt (5) des Hohlkörpers (1) mit einer Öffnung (6), aus der das zu transportierende Material (3) in den Innenraum des Hohlkörpers (1) eintreten und/oder aus dem Innenraum des Hohlkörpers (1) austreten kann, wobei die Öffnung (6) an den Zielort mündet, an dem lokal die photoneninduzierte Modifikation des Materials (3) stattfindet, und wobei der Hohlkörper (1) im Innenraum wenigstens einen Lichtleiter (2) aufweist, der so ausgestaltet ist, dass ein Eingangslicht, welches in den Lichtleiter (2) aus einer Photonenquelle (9) eintritt, nur an der Öffnung (6) des unteren Abschnitts (5) des Hohlkörpers (1) austritt.

2. Vorrichtung nach vorhergehendem Anspruch,
**dadurch gekennzeichnet, dass**
der Hohlkörper (1) mehrere Lichtleiter (2) umfasst.

3. Vorrichtung nach einem der vorhergehenden Ansprüche,
**dadurch gekennzeichnet, dass**
der oder die Lichtleiter (2) als faserförmige/r, stabförmige/r oder rohrförmige/r Lichtkörper ausgestaltet ist/sind, von einem totalreflektierenden Material umhüllt ist/sind, jeweils eine Licht-Eingangsöffnung (7) und eine Licht-Ausgangsöffnung (8) aufweisen, wobei die LichtEingangsöffnung/en (7) an einer Photonenquelle (9) angeordnet ist/sind oder an wenigstens eine Photonenquelle (9) angeschlossen ist/sind und die Licht-Ausgangsöffnung/en (7) an der Öffnung (6) des unteren Abschnitts (5) des Hohlkörpers (1) angeordnet ist/ sind und in den Zielort mündet/münden.

4. Vorrichtung nach einem der vorhergehenden Ansprüche,
**dadurch gekennzeichnet, dass** der Durchmesser des Innenraums des Hohlkörpers (1) größer ist als der/die äußere/n Durchmesser des/der Lichtleiter/s (2), der/die im Innenraum angeordnet ist/sind.

5. Vorrichtung nach vorhergehendem Anspruch 3,
**dadurch gekennzeichnet, dass**
der Hohlkörper (1) doppelwandig ausgestaltet ist und der/die Lichtleiter (2) innerhalb dieser Doppelwand des Hohlkörpers (1) angeordnet ist/sind.

6. Vorrichtung nach einem der vorhergehenden Ansprüche 1 bis 3,
**dadurch gekennzeichnet, dass**
der/die Lichtleiter (2) von außen um den Hohlkörper (1) herum angeordnet ist/sind und/ oder diesen Hohlkörper (1) umhüllen.

7. Vorrichtung nach einem der vorhergehenden Ansprüche,
**dadurch gekennzeichnet, dass**
der oder die Lichtleiter (2) Licht gleicher oder unterschiedlicher Wellenlängen, Intensitäten oder Leistung ausstrahlen, die eine stufenweise oder unterschiedliche photoneninduzierte Modifikation des Materials (3) bewirken.

8. Vorrichtung nach einem der vorhergehenden Ansprüche,
**dadurch gekennzeichnet, dass**
die Lichtleiter (2) aus Kunststoff, Glas und/oder aus einem Mehrkomponentenmaterial aus SiO₂, GeO₂, Na₂O, CaO, Li₂O, MgO, und/oder Saphir bestehen.

9. Vorrichtung nach einem der vorhergehenden Ansprüche,
**dadurch gekennzeichnet, dass**
die Lichtleiter (2) aus PMMA, Polycarbonat, Silica, und/oder reinem SiO₂ bestehen.

10. Vorrichtung nach einem der vorhergehenden Ansprüche,
**dadurch gekennzeichnet, dass**
die Lichtleiter (2) Glasfasern, insbesondere Fluoritglasfasern und/oder KCI-Glasfasern, und/oder Kunststofffasern sind.

11. Vorrichtung nach einem der vorhergehenden Ansprüche,
**dadurch gekennzeichnet, dass**
sie wenigstens eine oder mehrere Kapillare/n und/oder Röhrchen/n (10) aufweist, die im Innenraum des Hohlkörpers (1) angeordnet ist/sind und/oder von außen um den Hohlkörper (1) herum angeordnet ist/sind und/oder diesen Hohlkörper (1) umhüllen.

12. Vorrichtung nach einem der vorhergehenden Ansprüche,
**dadurch gekennzeichnet,**
**dass** der Hohlkörper (1) neben den Lichtleitern (2) oder an Stelle der Lichtleiter, wenigstens eine Photonenquelle (9) ohne Lichtleiter aufweist, die im Innenraum oder Innenvolumen des Hohlkörpers (1) angeordnet ist und/oder von außen am Hohlkörper (1) sowie direkt am Zielort angeordnet ist.

13. Vorrichtung nach einem der vorhergehenden Ansprüche,
**dadurch gekennzeichnet, dass**
das Material des Hohlkörpers (1) inert ist gegenüber dem Material (3), welches photoneninduziert modifiziert wird.

14. Vorrichtung nach einem der vorhergehenden Ansprüche,
**dadurch gekennzeichnet, dass**
das Material des Hohlkörpers (1) Glas, Quarzglas, Metall und/oder Kunststoff umfasst.

15. Anordnung zur Aufnahme von Material und/oder zum Transport von Material (3) an einen Zielort oder von einem Zielort weg, an dem lokal eine photoneninduzierte Modifikation des Materials (3) erfolgt, umfassend mehr als eine Vorrichtung nach einem der vorhergehenden Ansprüche, die jeweils mit einer Photonenquelle (9) verbunden sind und wobei die wenigstens eine Photonenquelle (9) Licht gleicher oder unterschiedlicher Wellenlängen, Intensitäten oder Leistung aussendet.

16. Verfahren zur Aufnahme von Material und/oder zum Transport von Material (3) an einen Zielort oder von einem Zielort weg, an dem lokal eine photoneninduzierte Modifikation des Materials (3) erfolgt, umfassend folgende Verfahrensschritte:
a) Einbringen des Materials (3), welches photoneninduziert modifiziert werden soll, in den Innenraum eines Hohlkörpers (1) der Vorrichtung nach einem der vorhergehenden Ansprüche 1 bis 15 oder einer Anordnung nach Anspruch 16;
b) Transport des Materials (3) an die Öffnung (6) des Hohlkörpers (1) oder der Anordnung;
c) Anschließen einer Photonenquelle (9) an den/die Lichtleiter (2) des Hohlkörpers (1) oder der Anordnung und/oder
d) Einschalten der Photonenquelle (9) und lokale Einstrahlung der Photonenenergie aus der Photonenquelle (9) über den/die Lichtleiter (2) auf das Material (3) an der Öffnung (6) des Hohlkörpers (1) zur gezielten photoneninduzierten Modifikation des Materials (3) an der Öffnung (6) des Hohlkörpers (1).

17. Verfahren nach vorhergehendem Anspruch,
**dadurch gekennzeichnet, dass** der Transport des Materials (3) durch den Hohlkörper (1) oder durch die Anordnung zur Öffnung (6) des Hohlkörpers (1) gemäß Verfahrensschritt b) durch Ausüben von Druck auf den Innenraum im oberen Abschnitt (4) des Hohlkörpers (1) erfolgt.

18. Verfahren nach Anspruch 16,
**dadurch gekennzeichnet, dass** das Einbringen des Materials (3) gemäß Verfahrensschritt a) und/oder der Transport des Materials (3) gemäß Verfahrensschritt b) durch Aufnehmen oder Ansaugen des Materials (3) an die Öffnung (6) des Hohlkörpers (1) erfolgt.

19. Verfahren nach einem der vorhergehenden Ansprüche,
**dadurch gekennzeichnet, dass**
die Einstrahlung der Photonenenergie aus der Photonenquelle (9) auf den/die Lichtleiter (2) über der Lichteingangsöffnung (7) des/der Lichtleiter/s (2) und/oder durch Einstrahlung der Photonenenergie direkt aus der Photonenquelle (9) erfolgt.

20. Verfahren nach einem der vorhergehenden Ansprüche,
**dadurch gekennzeichnet, dass**
der Transport der Menge des Materials (3) zur Öffnung (6) des Hohlkörpers (1) in Abhängigkeit der eingestrahlten Photonenenergie, die durch die Lichtleiter (2) auf die Öffnung (6) trifft, gesteuert wird.

21. Verfahren nach einem der vorhergehenden Ansprüche,
**dadurch gekennzeichnet, dass**
Material (3) eingesetzt wird, welches photoneninduzierbar ist, insbesondere Photopolymere, anorganische und/oder organische Photolacke, Epoxidharze, Komposit-Materialien aus Polymeren, anorganische Füllmaterialien, zusammen mit Fasermaterialien, epoxidiertes Leinsamenöl für 3D-Drucker, Bio-Kollagene und/oder mimetische Proteine.

22. Verfahren nach einem der vorhergehenden Ansprüche,
**dadurch gekennzeichnet, dass**
als Photonenquellen (9) gepulste und nicht-gepulste Leuchtdioden und/oder Laser eingesetzt werden.

23. Verfahren nach einem der vorhergehenden Ansprüche,
**dadurch gekennzeichnet, dass**
die Photonenenergie, die eingestrahlt wird, so eingestellt wird, dass sie der Energie entspricht, die für die Modifikation des Materials (3) benötigt wird.

24. Verfahren nach einem der vorhergehenden Ansprüche,
**dadurch gekennzeichnet, dass**
die photoneninduzierte Modifikation des Materials (3) durch Zugabe von Initiatoren, Inhibitoren, Katalysatoren zusätzlich gesteuert wird.

25. Verfahren nach einem der vorhergehenden Ansprüche,
**dadurch gekennzeichnet, dass** ein sequentielles oder gepulstes Einschalten der Photonenquelle (9) gemäß Verfahrensschritt d) durchgeführt wird und/oder ein Einschalten und Zuschalten von weiteren Photonenquellen (9) erfolgt, die Licht mit unterschiedlichen oder gleichen Wellenlängen, Lichtintensitäten und Lichtleistungen ausstrahlen.

26. Verfahren nach einem der vorhergehenden Ansprüche,
**dadurch gekennzeichnet, dass** gemäß Verfahrensschritt a) ein Einbringen von unterschiedlichen Materialien (3), die photoneninduzierbar sind, erfolgt und/oder ein Einbringen von Materialien (3) erfolgt, welche als Reaktionsedukte wirken und zusammen mit einem Material (3) am Zielort, eine photoneninduzierte Reaktion am Zielort eingehen.
